# EUROPÄISCHE PATENTSCHRIFT

(11) **EP 1 377 869 B1**
(45) Veröffentlichungstag und Bekanntmachung des Hinweises auf die Patenterteilung: **07.03.2007**
(21) Anmeldenummer: 02729845.4
(22) Anmeldetag: 03.04.2002
(51) Int. Cl.: G08B 17/107

(54) **STREULICHTRAUCHMELDER MIT SPIEGELARRAY ZUR ABLENKUNG VON OPTISCHEN STRAHLEN**
SCATTERED LIGHT SMOKE DETECTOR WITH MIRROR ARRAY FOR DEFLECTING OPTICAL BEAMS
DETECTEUR DE FUMEE PAR LUMIERE DISPERSEE AVEC MATRICE DE MIROIRS POUR LA DEVIATION DE RAYONS OPTIQUES

(30) Priorität: 04.04.2001 DE 10116723
(43) Veröffentlichungstag der Anmeldung: 07.01.2004
(73) Patentinhaber: ROBERT BOSCH GMBH, 70442 Stuttgart (DE)
(72) Erfinder: PFEFFERSEDER, Anton, 82054 Sauerlach-Arget (DE); SIBER, Bernd, 85625 Glonn (DE); HENSEL, Andreas, 85658 Egmating (DE); ROTTMANN, Frank, 81667 München (DE); OPPELT, Ulrich, 85604 Zorneding (DE)
(86) Internationale Anmeldenummer: PCT/DE2002/001195
(87) Internationale Veröffentlichungsnummer: WO 2002/082161

(56) Entgegenhaltungen:
- DE-A- 19 906 407
- DE-C- 4 402 775
- US-A- 5 451 931
- PATENT ABSTRACTS OF JAPAN vol. 1999, no. 04, 30. April 1999 (1999-04-30) -& JP 11 003849 A (SONY CORP), 6. Januar 1999 (1999-01-06)
- PATENT ABSTRACTS OF JAPAN vol. 1999, no. 13, 30. November 1999 (1999-11-30) -& JP 11 231234 A (ASAHI OPTICAL CO LTD), 27. August 1999 (1999-08-27)

## Beschreibung

### Stand der Technik

Die Erfindung geht aus von einem Streulichtrauchmelder mit einer Vorrichtung zur Ablenkung von optischen Strahlen nach der Gattung des unabhängigen Patentanspruchs.

Es ist bereits bekannt, mikromechanische Spiegelarrays zu verwenden, bei denen die einzelnen Spiegelelemente in zwei verschiedenen Winkelpositionen einstellbar sind. Diese Spiegelarrays werden dann beispielsweise in Beamern zur Präsentation eingesetzt.

Weiterhin sind Streulichtrauchmelder mit planaren optischen Elementen wie z.B. Mikro-Fresnelelementen bekannt, siehe US-A-5,451,931.

### Vorteile der Erfindung

Die erfindungsgemäße Vorrichtung mit den Merkmalen des unabhängigen Patentanspruchs 1 hat demgegenüber den Vorteil, dass die einzelnen Spiegelelemente unabhängig voneinander in beliebigen Winkeln eingestellt werden können. Dies hat den Vorteil, dass verschiedene Optiken wie Linsen, Spiegel und asphärische Geometrien wie z.B. Paraboloide, Ellipsoide und Zylinderoptiken realisiert werden können. Bei den Spiegeln lassen sich durch das Ansteuern der einzelnen Spiegelelemente, Hohlspiegel mit verschiedenen Brennweiten und verschiedenen optischen Achsen verwirklichen. Durch die hohe Auflösung des Arrays und die kleine Masse der Spiegelelemente können diese Optiken über der Zeit gleitend oder abrupt geändert werden. Die Schaltzeit der einzelnen Spiegelelemente ist sehr kurz, im Bereich von Millisekunden oder darunter, so dass unterschiedliche Optiken im Zeitmultiplex zur Verfügung stehen.

Durch die in den abhängigen Ansprüchen aufgeführten Maßnahmen und Weiterbildungen sind vorteilhafte Verbesserungen der im unabhängigen Patentanspruch angegebenen Vorrichtung möglich.

Besonders vorteilhaft ist, dass das Array mikromechanisch herstellbar ist. Damit ist eine Massenfertigung mit hoher Güte und einer Vielzahl von Spiegelelementen leicht möglich. Dabei ist es insbesondere von Vorteil, dass die Spiegel entweder durch eine kapazitive oder eine thermische Aktorik verdrehbar sind. Bei der kapazitiven Aktorik werden elektrische Felder verwendet, während bei der thermischen Aktorik beispielsweise durch verschieden hohe Stromstärken und damit einer unterschiedlichen Aufheizung einer mikromechanischen Struktur eine Verdrehung der Spiegelelemente erreicht wird.

Es ist von Vorteil, dass das Array in einem Streulichtrauchmelder eingesetzt wird, der entweder eine labyrinthartige Meßkammer aufweist oder ein Freilichtstreulichtrauchmelder ist. Durch das Array kann das Volumen der Meßkammer oder des Meßvolumens zeitlich und räumlich abgetastet werden. Weiterhin kann man die Wände der Meßkammer abtasten und erhält so über das gewonnene Signal eine Aussage über die Verschmutzung der Kammer und die Funktionsbereitschaft des Systems. Die Signale aus den unterschiedlichen Streubereichen geben Aufschluss über die Homogenität des Raumes und lassen Rückschlüsse auf Insekten oder Staubpartikel zu. In Streulichtrauchmeldern ohne Meßkammer, die den Rauch direkt im freien Raum messen, gelten die gleichen Aussagen. Durch Vergleich der Signale aus unterschiedlichen Raumbereichen kann zwischen einer Störung und einem tatsächlichen Rauchsignal geschlossen werden.

Es ist weiterhin von Vorteil, dass beispielsweise ein Array dazu verwendet wird, um sowohl für einen passiven Infrarotsensor und für einen Rauchmelder eingesetzt zu werden. Damit lassen sich sehr kompakte multifunktionelle Sensoren verwirklichen. Es ist im übrigen auch von Vorteil, dass anstatt nur eines Arrays auch mehrere erfindungsgemäße Arrays kombiniert werden können, um auch kompliziertere Optiken zu realisieren.

### Zeichnung

Ausführungsbeispiele der Erfindung sind in der Zeichnung dargestellt und werden in der nachfolgenden Beschreibung näher erläutert. Es zeigt
Figur 1 eine schematische Darstellung des verwendeten Arrays,
Figur 2 ein drehbares Spiegelelement,
Figur 3 die Bildung eines Hohlspiegels durch das Array,
Figur 4 die Kombination eines Infrarotmelders mit einem Streulichtrauchmelder.

### Beschreibung

Viele Detektionsprinzipien in der Sicherheitstechnik arbeiten mit speziellen Optiken. Passive Infrarotmelder arbeiten mit segmentierten Optiken, um aus verschiedenen Raumbereichen Wärmestrahlung auf einen Wärmestrahlungssensor zu leiten. Diese Optiken bestehen aus Spiegeln und Fresnellinsen, die individuell auf die Eigenschaften solcher Detektoren entworfen sind und entsprechend hohen Entwicklungsaufwand bedeuten. Erfindungsgemäß wird in einem Streulichtrauchmelder ein Array aus Spiegelelementen eingesetzt, wobei die einzelnen Spiegelelemente unabhängig voneinander in beliebige Winkel verdrehbar sind. Damit lassen sich viele Optiken realisieren, für die bisher eine individuelle Ausgestaltung verwendet werden mußte. Damit wird eine hohe Flexibilität erreicht. Das Array wird auch als Spiegelarray bezeichnet.

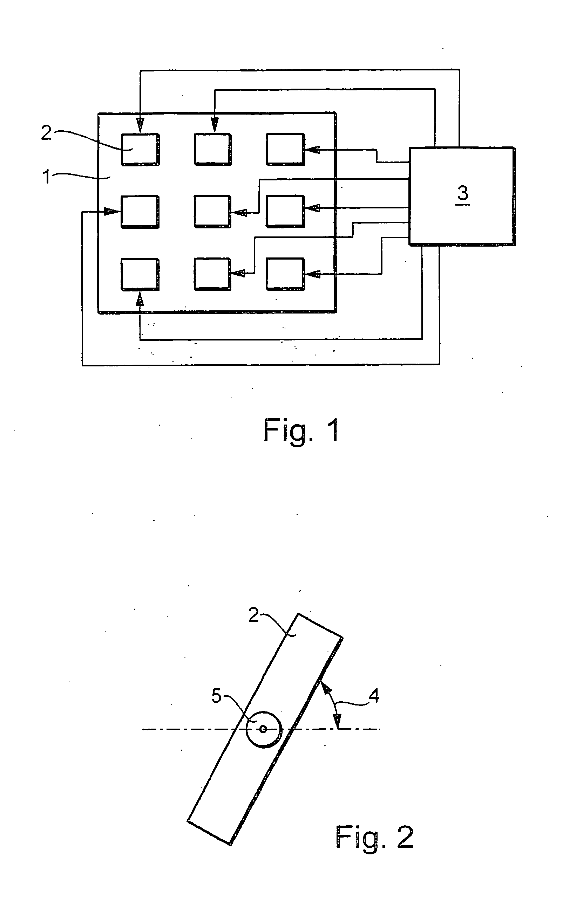

Figur 1 zeigt eine schematische Darstellung des verwendeten Arrays. Ein Array 1 aus Spiegelelementen 2, hier sind es neun, wird durch einen Prozessor 3 angesteuert. Der Prozessor 3 ist mit jedem Spiegelelement 2 über eine eigene Leitung verbunden, um über die dem Spiegelelement 2 zugeordnete Aktuatorik das Spiegelelement 2 entsprechend der Signale, die der Prozessor 3 erhält, zu verdrehen. Die Aktuatorik ist am jeweiligen Spiegelelement angeordnet. Um die Ansteuerbefehle des Prozessors 3 umzusetzen, ist darüber hinaus eine entsprechende Ansteuerelektronik bei der jeweiligen Aktuatorik vorhanden. Alternativ kann diese Ansteuerelektronik auch zentral angeordnet sein und alle Aktuatoriken versorgen.

Der Prozessor 3 ist dabei beispielsweise mit einer Eingabevorrichtung verbunden, um eine entsprechende Verdrehung der Spiegelelemente 2 vorzunehmen.

Da das Array 1 mikromechanisch aus Silizium herstellbar ist, ist eine Massenfertigung und eine Herstellung von Arrays mit einer hohen Anzahl von Spiegelelementen möglich. Als Aktuatorprinzipien können beispielsweise kapazitive oder thermische Aktuatoren verwendet werden. Bei einer kapazitiven Steuerung der Spiegelelemente wird eine Adreßelektrode eingesetzt, wobei die Spannung zwischen der Adreßelektrode und dem Spiegelelement die Auslenkung des Spiegels bestimmt. Damit sind beliebige Winkel des Spiegelelements im Vergleich zur Fläche einstellbar. Die Ansteuerung kann dabei durch eine Pulsweitenmodulation vorgenommen werden. Die Spiegelelemente 2 können durch eine Oberflächenbehandlung, beispielsweise durch Bedampfen oder Abscheiden mit einem Metall, für das Licht entsprechend gut reflektierend ausgestaltet sein. Dabei kann insbesondere auf interessierende Wellenlängenbereiche eingegangen werden, indem für eine Infrarotanwendung eine Beschichtung gewählt wird, die vorzugsweise Infrarotlicht mit einem hohem Wirkungsgrad reflektiert.

Figur 2 zeigt ein Spiegelelement 2, das um seine Achse, die durch die gestrichelte Linie angedeutet ist, um einen Drehpunkt 5 um einen beliebigen Winkel 4 drehbar ist. Dies wird durch die entsprechende Aktuatorik erreicht. Damit sind dann durch das Kollektiv der Spiegelelemente als Array 1 verschiedene Optiken darstellbar.

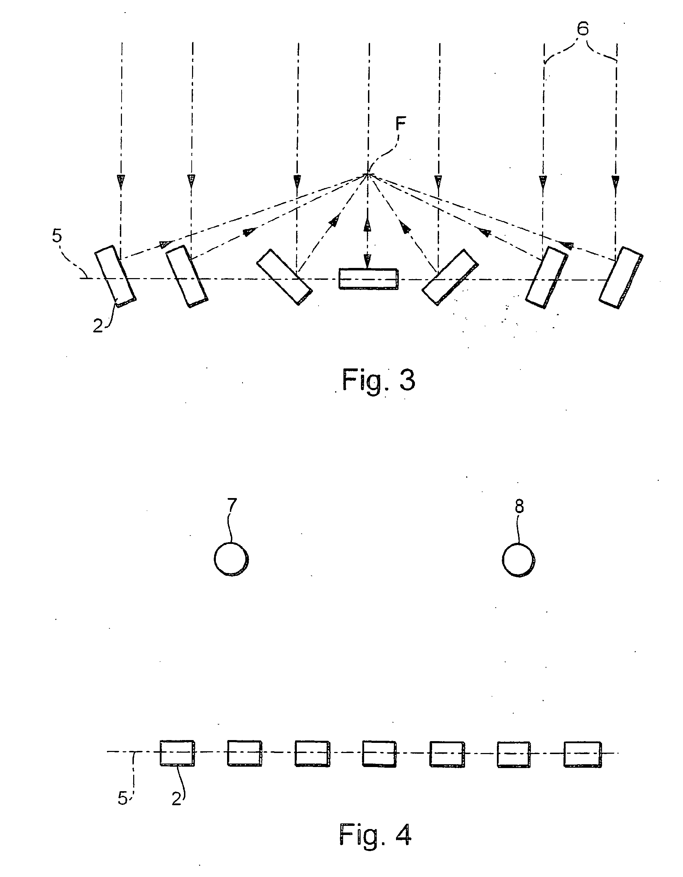

Figur 3 zeigt beispielhaft, wie durch das Array 1 und das Verdrehen der Spiegelelemente 2 ein Hohlspiegel nachgebildet werden kann. Es ist hier eine Zeile von sieben Spiegelelementen 2 dargestellt, die sich auf der Achse 5 befinden. Wie in Fig. 1 dargestellt ist auch eine Matrix von Spiegelelementen 2 möglich. Dies erlaubt dann eine Nachbildung einer komplexeren Optik durch das Array.

Die Spiegelelemente 2 sind hier durch den Prozessor 3 so angesteuert worden, dass sie alle auf einen Brennpunkt F zeigen. Parallel einfallendes Licht 6 wird dadurch auf den Punkt F durch die Spiegelelemente 2 fokussiert. Damit wird ein Hohlspiegel verwirklicht. Durch die Verdrehung der Spiegelelemente 2 sind nahezu beliebige Brennpunkte F realisierbar. Andere Spiegel sind durch eine entsprechende Ansteuerung der Spiegelelemente möglich.

In Figur 4 ist dargestellt, wie mit dem Array 1 und den Spiegelelementen 2 ein kombinierter Passivinfrarotmelder und ein Streulichtrauchmelder realisiert ist. Ein Infrarotdetektor 7, hier ein pyroelektrischer oder Thermosäulensensor, und der Streulichtempfänger 8 sind so angeordnet, dass das Array 1 mit den Spiegelelementen 2, die auf der Achse 5 angeordnet sind, auf beide abwechselnd das empfangene Licht fokussiert. Der Prozessor 3 steuert also die Spiegelelemente 2 so an das jeweils der Infrarotdetektor 7 und der Streulichtempfänger 8 im Brennpunkt liegen. Die entsprechende Auswerteschaltung der Signale des Infrarotempfängers 7 und des Streulichtrauchmelders 8 sind hier der Einfachheit halber nicht dargestellt.

Dabei ist es insbesondere möglich, dass mit den Spiegelelementen 2 ein Raumvolumen abgetastet wird. Je nach Anwendung wird das Licht entweder auf den Infrarotsensor 7 oder den Streulichtsensor 8 für eine gewisse Zeit oder abwechselnd fokussiert.

## Patentansprüche

1. Streulichtrauchmelder mit einer Vorrichtung zur Ablenkung von optischen Strahlen (6), **dadurch gekennzeichnet, dass** die Vorrichtung wenigstens ein Array (1) aus verdrehbaren Spiegelelementen (2) und einen Prozessor (3) zur Ansteuerung der Spiegelelemente (2) aufweist, wobei diese Spiegelelemente (2) unabhängig voneinander in beliebigen Winkeln (4) verdrehbar sind, wobei das wenigstens eine Array (1) in dem Streulichtrauchmelder so angeordnet ist, dass durch das Array (1) ein Streuvolumen und eine MeBumgebung abgetastet werden kann.

2. Streulichtrauchmelder nach Anspruch 1, **dadurch gekennzeichnet, dass** wenigstens ein Array (1) mikromechanisch herstellbar ist.

3. Streulichtrauchmelder nach Anspruch 2, **dadurch gekennzeichnet, dass** die Spiegelelemente (2) durch eine kapazitive oder thermische Aktuatorik verdrehbar sind.

4. Streulichtrauchmelder nach einem der Ansprüche 1 bis 3, **dadurch gekennzeichnet, dass** das wenigstens eine Array durch den Prozessor (3) zur Abtastung eines Raumelements ansteuerbar ist, wobei das wenigstens eine Array (1) das vom Raumelement kommende Licht auf einen Lichtempfänger (7, 8) abbildet.

5. Streulichtrauchmelder nach Anspruch 4, **dadurch gekennzeichnet, dass** der Lichtempfänger (7) als Infrarotdetektor ausgebildet ist.

6. Streulichtrauchmelder nach Anspruch 1 oder 5, **dadurch gekennzeichnet, dass** das wenigstens eine Array (1) empfangenes Licht auf einen passiven Infrarotsensor (7) und einen Empfänger (8) des Streulichtrauchmelders fokussiert.

## Claims

1. Scattered light smoke detector with a device for deflecting optical beams (6), **characterized in that** the device has at least one array (1) comprising rotatable mirror elements (2) and a processor (3) for driving the mirror elements (2), wherein these mirror elements (2) can be rotated, independently of one another, at any desired angles (4), wherein the at least one array (1) is arranged in the scattered light smoke detector such that the array (1) can be used to scan a scattering volume and a measurement environment.

2. Scattered light smoke detector according to Claim 1, **characterized in that** at least one array (1) can be produced micromechanically.

3. Scattered light smoke detector according to Claim 2, **characterized in that** the mirror elements (2) can be rotated using a capacitive or thermal actuator system.

4. Scattered light smoke detector according to one of Claims 1 to 3, **characterized in that** the at least one array can be driven by the processor (3) for the purpose of scanning a spatial element, wherein the at least one array (1) images the light coming from the spatial element onto a light receiver (7, 8).

5. Scattered light smoke detector according to Claim 4, **characterized in that** the light receiver (7) is in the form of an infrared detector.

6. Scattered light smoke detector according to Claim 1 or 5, **characterized in that** the at least one array (1) focuses received light onto a passive infrared sensor (7) and a receiver (8) of the scattered light smoke detector.

## Revendications

1. Détecteur de fumées par lumière dispersée comportant un dispositif pour dévier des rayons optiques (6),
**caractérisé en ce que**
le dispositif comporte au moins un réseau (1) d'éléments de miroir (2) susceptibles de tourner et un processeur (3) pour commander les éléments de miroir (2),
ces éléments de miroir (2) pouvant tourner indépendamment les uns des autres suivant des angles quelconques (4), et
au moins un réseau (1) est installé dans le détecteur de fumées par lumière dispersée de façon que le réseau (1) permette de détecter un volume de dispersion et un environnement de mesure.

2. Détecteur de fumées par lumière dispersée selon la revendication 1,
**caractérisé en ce qu'**
au moins un réseau (1) est fabriqué en micromécanique.

3. Détecteur de fumées par lumière dispersée selon la revendication 2,
**caractérisé en ce que**
les éléments de miroir (2) sont tournés par des actionneurs capacitifs ou thermiques.

4. Détecteur de fumées par lumière dispersée selon l'une des revendications 1 à 3,
**caractérisé en ce qu'**
au moins un réseau est commandé par le processeur (3) pour détecter un élément de volume, et donne une image de la lumière venant de l'élément de volume sur un photorécepteur (7, 8).

5. Détecteur de fumées par lumière dispersée selon la revendication 4,
**caractérisé en ce que**
le photorécepteur (7) est un détecteur de lumière infrarouge.

6. Détecteur de fumées par lumière dispersée selon la revendication 1 ou 5,
**caractérisé en ce qu'**
au moins un réseau (1) focalise la lumière reçue sur au moins un détecteur infrarouge passif (7) ou un récepteur (8) du détecteur de fumées par lumière dispersée.
